# EUROPEAN PATENT APPLICATION

(11) **EP 2 781 792 A1**
(43) Date of publication of application: **24.09.2014**
(21) Application number: 13305342.1
(22) Date of filing: 21.03.2013
(51) Int. Cl.: F16H 55/36

(54) **Pulley device and rotary machine comprising such a device**

(71) Applicant: Aktiebolaget SKF, 41550 Göteborg (SE)
(72) Inventor: Viault, Samuel, 37360 Saint-Antoine-du-Rocher (FR); Berruet, Nicolas, 37260 Artannes sur Indre (FR)
(74) Representative: Kohl, Thomas

(57) **Abstract**

The invention concerns a pulley device (1) for a rotary machine comprising a pulley (6), a rolling bearing (7) a torque transmission plate (8) mounted on a rotary spindle (4) of the rotary machine and having the general shape of a disc. Said pulley is mounted on an outer ring (10) of the rolling bearing (7) and on the torque transmission plate (8). The torque transmission plate (8) is able to transmit a rotational movement from the pulley (6) to the rotary spindle (4). Said torque transmission plate (8) comprises torque limiters consisting in a series of slotted holes (18, 19) made through the plate (8) so that the ends (18a, 18b; 19a, 19b) of two adjacent slotted holes (18, 19) form a bridge (16a) on the plate (8) liable to rupture if the torque transmission plate (8) transmits a torque exceeding a threshold value. The ends (18a, 18b; 19a, 19b) of at least one slotted hole (18, 19) are connected by an inner edge (18d, 19d) and an outer edge (18c, 19c) so that the radial gap between the said edges (18c, 18d; 19c, 19d) is not constant.

## Description

The invention relates to the field of torque transmission devices used in particular in belt-driven rotary machines, for example motor vehicle air conditioning compressors.

In such compressor drive devices, a belt-driven pulley drives the transmission spindle of the compressor via a torque transmission plate. The pulley is mounted on the outer ring of a rolling bearing, the inner ring of which is secured to a hollow shaft of the compressor housing. This type of device is described particularly in document FR 2 790 521.

It is also known from the document JP-B-4015072 to provide torque limiters to the torque transmission plate. Indeed, since the belt-drive is driven by an internal combustion engine of the motor vehicle, an excessive torque value can be applied to the transmission spindle via the torque transmission plate that could create internal damages. The torque limiters consist in concentric slotted holes uniformly spaced so that it remains bridges on the plate between the ends of two successive slotted holes. The bridges are designed to rupture in case of an excessive transmitted torque.

Such a compressor drive device needs special fitting tools to be mounted to the rotary spindle of the compressor. For instance, a crimping tool may be use to axially fit the rolling bearing onto the rotary spindle. Then it makes necessary special mounting processes and an adaptation of the compressor drive device for facilitating the mounting. However, it induces an increase of the manufacturing time and costs.

It is therefore a particular object of the present invention to overcome these aforementioned drawbacks by providing a pulley device of simple design, that is easy to assemble, economical, able to operate for a long time in both an effective and an economic manner.

The invention concerns a pulley device for a rotary machine comprising a pulley, a rolling bearing, a torque transmission plate mounted on a rotary spindle of the rotary machine and having the general shape of a disc. Said pulley is mounted on an outer ring of the rolling bearing and on the torque transmission plate, the torque transmission plate being able to transmit a rotational movement from the pulley to the rotary spindle. Said torque transmission plate comprises torque limiters consisting in a series of slotted holes made through the plate so that the ends of two adjacent holes form a bridge on the plate liable to rupture if the torque transmission plate transmits a torque exceeding a threshold value.

According to the invention, the ends of at least one slotted hole are connected by an inner edge and an outer edge so that the radial gap between the said edges is not constant.

Thanks to this invention, the slotted holes used as torque limiters can be designed so that mounting tools can be inserted during the compressor drive device mounting process.

There is no need of any other adaptation for the device technical design to insert tools, then the manufacturing extra cost is limited. Moreover, the mounting process is facilitated so this is time saving.

According to further aspects of the invention, which are advantageous but not compulsory, such a rolling bearing may incorporate one or several of the following features as long as there is no contradiction:
- The rolling elements of the rolling bearing are balls mounted in a rolling chamber defined between the inner and outer rings.
- The rolling bearing comprises an inner ring fitted on a static hollow shaft of the rotary machine and axially maintained between a shoulder of the static hollow shaft and a circlips inserted in a groove of the said hollow shaft.
- The torque transmission plate comprises an axial sleeve designed to be mounted on the rotary spindle of the rotary machine and a radial plate extending from the axial sleeve and having the general shape of a disc.
- The torque transmission plate comprises damping elements made of elastic material mounted between the radial plate and the pulley so that it damps the vibrations between the pulley and the rotary spindle.
- The radial plate comprises the torque limiters consisting in a series of slotting holes.
- The radial plate is made of a stamped metal sheet.
- The torque limiter comprises at least three slotted holes made through the radial plate of the torque transmission plate.
- The slotted holes are identical.
- The slotted holes are angularly equidistant.
- The ends of the slotted holes have each an arc circle shape defining an inner portion and an outer portion.
- The inner portions of the ends of the slotted holes are centred on one and the same circle of radius R1 and centred on the rotary spindle axis.
- The inner edge connecting two ends of at least one slotted hole is an arc circle of radius R1 centred on the rotary spindle axis.
- The outer portions of the ends of the slotted holes are centred on one and the same circle of radius R2 and centred on the rotary spindle axis.
- The outer edge connecting two ends of at least one slotted hole is an arc circle of radius R2 centred on the rotary spindle axis.
- At least one of the inner or outer edges connecting two ends of at least one slotted hole comprises a radial recess.
- One edge connecting two ends of at least one slotted hole comprises a radial recess extending in the opposite direction to the other edge. In other words, the inner edge recess is radially inwardly directed or the outer edge recess is radially outwardly directed.
- The recess on one of the inner or outer edges is defined on an angular sector 02 which is greater than or equal to half of the angular sector O1 defined between two ends of one slotted hole.

The present invention also concerns a rotary machine comprising a static hollow shaft, a rotary spindle and a pulley device according to any of the preceding embodiments.

The present invention and its advantages will be better understood by studying the detailed description of specific embodiments given by way of non-limiting examples and illustrated by the appended drawings on which:
- Figure 1 is a front view of a pulley device according to a first embodiment of the invention;
- Figure 2 is a detailed of one aspect of the pulley device according to the first embodiment of the invention;
- Figure 3 is an axial section, along the line II-II of Figure 1; and
- Figure 4 is a front view of a pulley device according to a second embodiment of the invention.

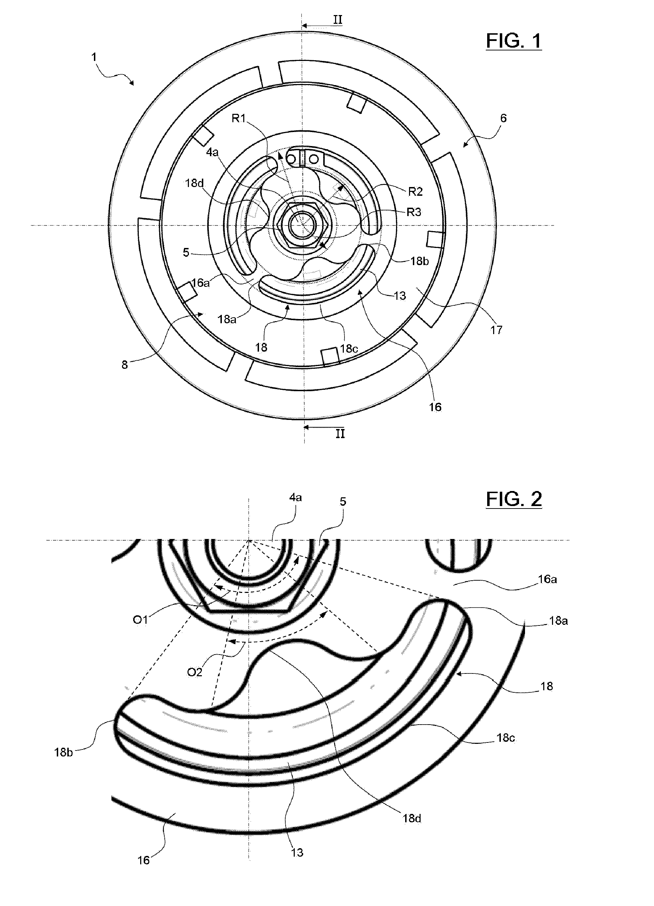

As illustrated on Figures 1 to 3, a pulley device, designed by general reference 1, is designed to be mounted on a compressor 2 comprising a housing consisting in a hollow shaft 3 that does not rotate, and a rotary spindle 4 capable of rotating about an axis X4.

The transmission spindle 4 is provided with a stepped end 4a ending in a threaded portion 4b so that it can interact with a nut 5.

The transmission spindle 4 passes through the hollow shaft 3 coaxial with the said spindle 4.

The pulley device 1 comprises a pulley 6, a rolling bearing 7 and a torque transmission plate 8. The pulley 6 has an outer surface 6a designed to cooperate with a belt (not illustrated) and a bore 6b. The outer surface 6a comprises annular ribs to cooperate with a belt of the poly-V type for example. The bore 6b comprises a plurality of stiffening ribs 6c for reinforcing the pulley structure. The pulley 7 may be made of resin, for example based on polyamide, phenolic resin or alternatively polyurethane or light alloy.

The rolling bearing 7 comprises an inner ring 9, an outer ring 10, one row of rolling elements 11, here balls, and two seals 12a and 12b. The rolling bearing 7 may also comprise a cage (not represented) to maintain uniform circumferential spacing of the rolling elements 11.

The inner ring 9 comprises an outer surface 9a of revolution provided with a concave recess forming a raceway for the rolling elements 11. It also comprises a bore 9b in contact with an outer axial surface 3a of the hollow shaft 3. The inner ring also comprises two lateral radial surfaces 9c and 9d, the lateral surface 9c being in contact with a radial surface 3b of the hollow shaft 3, for example a shoulder. The lateral surface 9d is in contact with an annular ring or circlips 13 engaged in a groove 3c provided on the outer axial surface 3a of the hollow shaft 3.

The outer ring comprises an outer surface 10a, a bore 10b and two radial surfaces 10c and 10d. The bore 10b is provided with a concave recess forming a raceway for the rolling elements 11.

The pulley device 1 further comprises a bearing shield 14 placed between the outer ring 10 of the rolling bearing 8 and the inner bore 6b of the pulley 6. The bearing shield 14 comprises an axial portion 14a in contact with the outer surface 10a of the outer ring 10 and with the inner bore 6b of the pulley 6. The axial portion 14a extends radially towards the inner ring 9 with a radial portion 14b in contact with the radial surface 10d of the outer ring 10 and with a radial surface 6d of the bore 6b of the pulley 6, for example a shoulder. Such a bearing shield 14 forms a housing for the rolling bearing 8. The pulley may be overmoulded on the axial portion 14a of the bearing shield 14.

The seals 12a and 12b are force-fitted into slots formed from the bore 10b of the outer ring 10 and near the radial surfaces 10c, 10d.

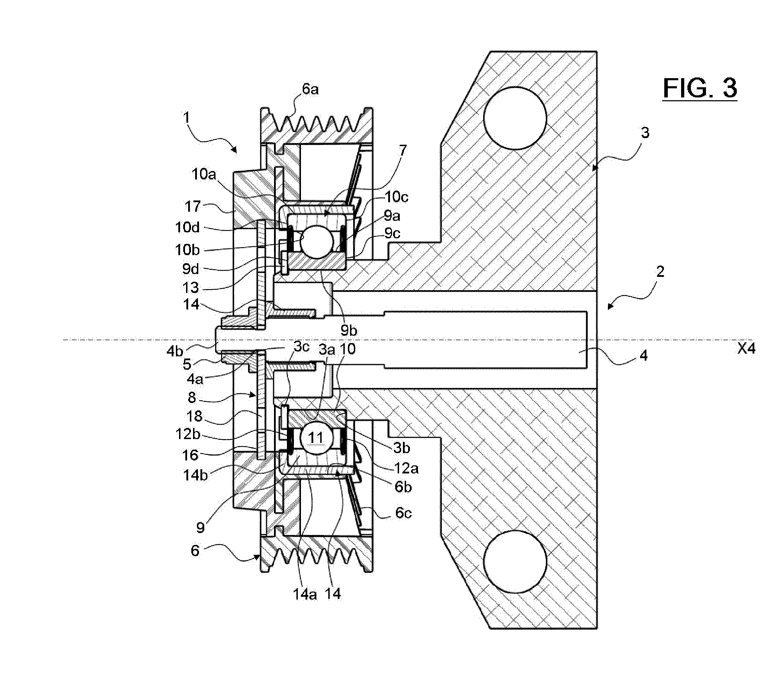

The torque transmission plate 8 comprises a sleeve tube 15, a radial plate 16 and a damping element 17. The sleeve tube 15 is mounted on the end 4a of the transmission spindle 4. The radial plate 16 extends radially from the axial sleeve tube 15 towards the outside and has the general shape of a disc. The radial plate 16 is made of a stamped metal sheet. In the example of Figure 3, the sleeve tube 15 and the radial plate 16 are two distinct components. As an alternative, the sleeve tube 15 and the radial plate 16 may form a one-piece component.

The damping element 17 is radially located between the radial plate 16 and the pulley 6 and is overmoulded onto these two components. The damping element 17 allows the vibration between the pulley 6 and the rotary spindle 4 to be damped. The damping element 17 can be of elastomeric material, for example a rubber material or a polyurethane material. The assembly comprising the pulley 6 and the torque transmission plate 8 which comprises the radial plate 16 and the damping element 17, forms one and the same indivisible component.

According to the invention, the radial plate 16 of the torque transmission plate 8 comprises torque limiters consisting a one series of slotted holes 18 made axially through the radial plate 16. As illustrated in Figures 1 and 2 corresponding to the first embodiment of the present invention, the slotted holes 18 are identical, have the form of three annular portions centred on one and the same circle and are angularly equidistant. As an alternative not represented, the number slotted holes 18 may be two or greater than three.

The slotted holes 18 each comprise two ends 18a and 18b with an arc circle shape defining an inner portion and an outer portion. As an alternative not represented, the ends 18a, 18b may have any other shapes such as an ellipse or a triangle. The slotted holes 18 are uniformly spaced so that it remains bridges 16a on the radial plate 16 between two ends 18a and 18b of two adjacent slotted holes 18. The bridges 16a define a regions of lower strength (compared to the rest of the radial plate 16) liable to rupture if the torque transmission plate 8 attempts to transmit a torque exceeding a threshold value, such as 50 N.m.

The outer portions of the ends 18a, 18b are centred on one and the same circle of radius R1 and centred on the axis X4. The outer portions of the ends 18a and 18b of one slotted hole 18 are connected by an outer edge 18c consisting in an arc circle of radius R1 centred on the axis X4.

The inner portions of the ends 18a, 18b are centred on one and the same circle of radius R2 strictly lower than R1 and centred on the axis X4. The inner portions of the ends 18a and 18b of one slotted hole 18 are connected by an inner edge 18d comprising a radial recess of curved shape. The said radial recess radially extends in the opposite direction to the outer edge 18c, i.e. is directed towards the axis X4 up to an extremity at a radius R3 strictly lower than R2.

As illustrated in Figure 2, the radial recess of the inner edge 18d is defined on an angular sector 02 which is equal to half of the angular sector O1 defined between two ends 18a and 18b of one slotted hole 18.

Then the radial gap between the inner edge 18d and the outer edge 18c is not constant and permits to cooperate with a tool (not illustrated) for axially mounting and fixing the rolling bearing 7 and the pulley 6 onto the hollow shaft 3. The series of holes 18 acts as a tool inserting device and a torque limiter.

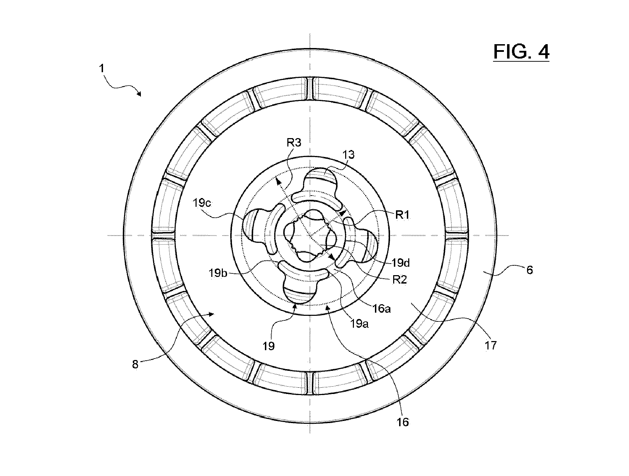

The second embodiment illustrated in Figure 4, in which identical elements bear the same references, differs from the embodiment of Figure 1 in that the radial plate 16 is provided with one series of slotted holes 19 having another shape.

The slotted holes 19 are identical, have the form of four annular portions centred on one and the same circle and are angularly equidistant. As an alternative not represented, the number slotted holes 19 may be smaller or greater than four.

The slotted holes 19 each comprise two ends 19a and 19b with an arc circle shape defining an inner portion and an outer portion. The slotted holes 19 are uniformly spaced so that it remains bridges 16a on the radial plate 16 between two ends 19a and 19b of two adjacent slotted holes 19. The bridges 16a are liable to rupture if the torque transmission plate 8 attempts to transmit a torque exceeding a threshold value.

The inner portions of the ends 19a, 19b are centred on one and the same circle of radius R2 and centred on the axis X4. The inner portions of the ends 19a and 19b of one slotted hole 19 are connected by an inner edge 19d consisting in an arc circle of radius R2 centred on the axis X4.

The outer portions of the ends 19a, 19b are centred on one and the same circle of radius R1 strictly higher than R2 and centred on the axis X4. The outer portions of the ends 19a and 19b of one slotted hole 19 are connected by an outer edge 19c comprising a radial recess of curved shape. The said radial recess radially extends in the opposite direction to the inner edge 19d, i.e. is directed towards the pulley 6 up to an extremity at a radius R3 strictly higher than R1.

## Claims

1. Pulley device for a rotary machine comprising a pulley (6), a rolling bearing (7) a torque transmission plate (8) mounted on a rotary spindle (4) of the rotary machine and having the general shape of a disc, said pulley being mounted on an outer ring (10) of the rolling bearing (7) and on the torque transmission plate (8), the torque transmission plate (8) being able to transmit a rotational movement from the pulley (6) to the rotary spindle (4), said torque transmission plate (8) comprising torque limiters consisting in a series of slotted holes (18, 19) made through the plate (8) so that the ends (18a, 18b; 19a, 19b) of two adjacent slotted holes (18, 19) form a bridge (16a) on the plate (8) liable to rupture if the torque transmission plate (8) transmits a torque exceeding a threshold value,
**characterized in that** the ends (18a, 18b; 19a, 19b) of at least one slotted hole (18, 19) are connected by an inner edge (18d, 19d) and an outer edge (18c, 19c) so that the radial gap between the said edges (18c, 18d; 19c, 19d) is not constant.

2. Pulley device according to claim 1 wherein the torque transmission plate (8) comprises a radial plate (16) provided with the torque limiters consisting in a series of slotting holes (18, 19).

3. Pulley device according to any of the preceding claims wherein the slotted holes (18, 19) are angularly equidistant.

4. Pulley device according to any of the preceding claims wherein the ends (18a, 18b; 19a, 19b) of the slotted holes (18, 19) have each an arc circle shape.

5. Pulley device according to any of the preceding claims wherein the ends (18a, 18b; 19a, 19b) of the slotted holes (18, 19) each define an inner portion centred on one and the same circle of radius R1 and centred on the rotary spindle axis (X4).

6. Pulley device according to any of the preceding claims wherein the ends (18a, 18b; 19a, 19b) of the slotted holes (18, 19) each define an outer portion centred on one and the same circle of radius R2 and centred on the rotary spindle axis (X4).

7. Pulley device according to claim 5 wherein two ends (18a, 18b; 19a, 19b) of at least one slotted hole (18, 19) are connected by an inner edge (18d, 19d) being an arc circle of radius R1 centred on the rotary spindle axis.

8. Pulley device according to claim 6 wherein two ends (18a, 18b; 19a, 19b) of at least one slotted hole (18, 19) are connected by an outer edge (18c, 19c) being an arc circle of radius R2 centred on the rotary spindle axis.

9. Pulley device according to any of the preceding claims wherein at least one of the inner edge (18d) or the outer edge (19c) connecting two ends (18a, 18b; 19a, 19b) of at least one slotted hole (18, 19) comprises a radial recess.

10. Pulley device according to claim 9 wherein the radial recess of one edge (18d, 19c) connecting two ends (18a, 18b; 19a, 19b) of at least one slotted hole radially extends in the opposite direction to the other edge (18c, 19d).

11. Pulley device according to any of the claims 9 or 10 wherein the recess on one of the edges (18d, 19c) is defined on an angular sector 02 which is greater than or equal to half of the angular sector O1 defined between two ends (18a, 18b; 19a, 19b) of one slotted hole (18, 19).

12. Pulley device according to any of the claims 2 to 11 wherein the torque transmission plate (8) comprises damping elements (17) made of elastic material mounted between the radial plate (16) and the pulley (6) so that it damps the vibrations between the pulley (6) and the rotary spindle (4).

13. Pulley device according to any of the claims 2 to 12 wherein the radial plate (16) is made of a stamped metal sheet.

14. Rotary machine comprising a static hollow shaft (3), a rotary spindle (4) and a pulley device (1) according to any of the preceding claims.
